# EUROPÄISCHE PATENTSCHRIFT

(11) **EP 2 327 117 B1**
(45) Veröffentlichungstag und Bekanntmachung des Hinweises auf die Patenterteilung: **27.02.2019**
(21) Anmeldenummer: 09780733.3
(22) Anmeldetag: 16.07.2009
(51) Int. Cl.: H01M 2/02, H01M 2/06

(54) **ZELLGEHÄUSE FÜR EIN GALVANISCHES ELEMENT**
CELL HOUSING FOR A GALVANIC ELEMENT
BOÎTIER DE PILE POUR UN ÉLÉMENT GALVANIQUE

(30) Priorität: 21.08.2008 DE 102008039043
(43) Veröffentlichungstag der Anmeldung: 01.06.2011
(73) Patentinhaber: MAHLE Behr GmbH & Co. KG, 70469 Stuttgart (DE)
(72) Erfinder: KOHLBERGER, Markus, 70174 Stuttgart (DE); HERRMANN, Hans-Georg, 66132 Saarbrücken (DE); MOSER, Michael, 73479 Ellwangen (DE); FEHRENBACHER, Christoph, 70597 Stuttgart (DE)
(74) Vertreter: Grauel, Andreas
(86) Internationale Anmeldenummer: PCT/EP2009/059181
(87) Internationale Veröffentlichungsnummer: WO 2010/020491

(56) Entgegenhaltungen:
- EP-A- 0 975 031
- EP-A- 1 868 257
- WO-A1-99/36971
- DE-A1- 19 910 433

## Beschreibung

Die vorliegende Erfindung bezieht sich auf ein Zellgehäuse für ein galvanisches Element und auf ein galvanisches Element, das beispielsweise für Batterien eingesetzt werden kann.

Bei Batterien für Hybrid- und Elektrofahrzeuge wird eine große Anzahl von galvanischen Zellen in Serie verschaltet. Dadurch kann eine höhere Spannung erzielt werden. Aufgrund der hohen Spannungen kann es bei mangelnder Isolation zu Spannungsüberschlägen kommen. Dies ist beispielsweise der Fall, wenn das Zellgehäuse Kontakt zum Batteriegehäuse hat, das normalerweise über die Fahrzeugkarosserie geerdet wird.

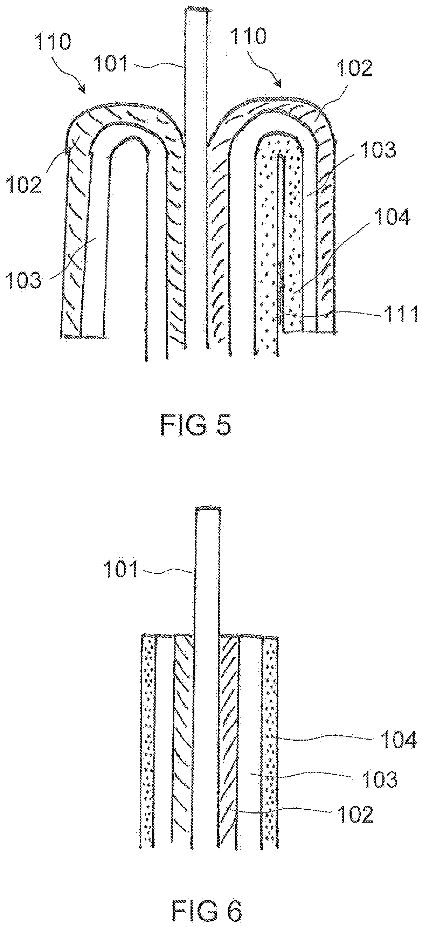

Fig. 6 zeigt einen Abschnitt eines Zellgehäuses einer sogenannten Coffee Bag Zelle, gemäß dem Stand der Technik. Die Coffee Bag Zelle weist einen Stromableiter 101 auf. Als Zellgehäuse kommt eine Aluminium-Verbundfolie mit einem Aufbau aus Polypropylen modifiziert 102, Aluminium 103 und Polyamid 104 zum Einsatz. Die Aluminium-Verbundfolie weist an den Schnittkanten blankes Aluminium 103 auf. Bei einem solchen Zellgehäuse besteht grundsätzlich die Gefahr, dass bei der Kontaktierung der Zelle das Aluminium 103 an der Schnittkante mit kontaktiert wird.

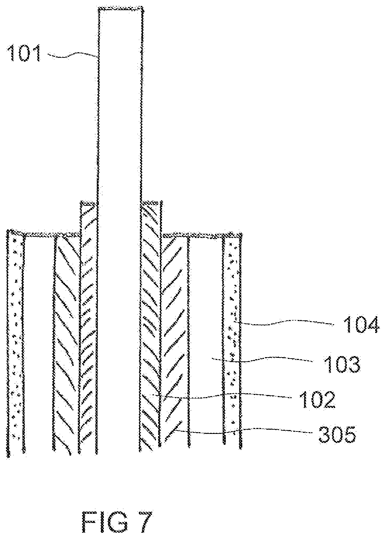

Fig. 7 zeigt einen Abschnitt eines weiteren Zellgehäuses gemäß dem Stand der Technik. Hier weist das Zellgehäuse eine weitere Haftvermittlerschicht zum Ableiter 101 auf. Neben den Schichten aus modifzierten Polypropylen 102, Aluminium 103 und Polyamid 104 ist in Fig. 7 eine zusätzliche Schicht 305 aus Polypropylen gezeigt.

Derzeit wird die Isolation konstruktiv gelöst, indem entsprechende Abstände eingehalten werden und Isolationsmaterialien verwendet werden. Kritische Stellen werden mit Kapton abgeklebt. Nachteilig dabei ist, dass bei größeren Abständen entsprechend mehr Bauraum benötigt wird, dies erschwert die Integration ins Fahrzeugpackage. Eine separate Isolation bedeutet zusätzliche Bauteile und zusätzlichen Aufwand bei der Assemblierung. Kaptonklebebänder können sich ablösen und so die Isolation nicht mehr gewährleisten.

Die WO 99/36971 A1 offenbart eine Batteriezelle mit nach außen geführtem Ableiter.

Es ist die Aufgabe der vorliegenden Erfindung ein verbessertes Zellgehäuse für ein galvanisches Element und ein verbessertes galvanisches Element zu schaffen.

Diese Aufgabe wird durch ein Zellgehäuse für ein galvanisches Element gemäß Anspruch 1 und ein galvanisches Element gemäß Anspruch 11 gelöst.
Der vorliegenden Erfindung liegt die Erkenntnis zugrunde, dass sich die Schnittkante eines Zellgehäuses aus Verbundfolie isolieren lässt, indem die Verbundfolie des Zellgehäuses an der Schnittkante umgeklappt wird, und der Endabschnitt nach der Biegung der Isolierschicht mit seiner Innenseite an eine Außenseite des Zellgehäuses angrenzt und die Innenseite mit der Außenseite des Zellgehäuses verklebt wird.

Vorteilhafterweise kann damit die Isolation Stromableiter zu Zellgehäuse konstruktiv einfach gewährleistet werden. Insbesondere kann die Isolation schon bei der Herstellung der Zelle sichergestellt werden. Der Verarbeitungsaufwand bei der Batterieassemblierung kann hierdurch reduziert werden.

Die vorliegende Erfindung schafft ein Zellgehäuse für ein galvanisches Element, wobei das Zellgehäuse eine Verbundfolie mit einer Isolierschicht und einer elektrisch leitfähigen Schicht aufweist, wobei ein Endabschnitt der Verbundfolie eine Biegung aufweist, die geeignet ist, um eine Isolierung für die elektrisch leitfähige Schicht auszubilden. Die Biegung kann durch Umklappen eines Endes der Verbundfolie erstellt werden. Somit kann die Schnittkante der Verbundfolie in eine Position gebracht werden, die nicht durch Spannungsüberschläge gefährdet ist.

Insbesondere kann die Biegung ausgebildet sein, um die elektrisch leitfähige Schicht gegenüber dem Ableiter der galvanischen Zelle zu isolieren. Somit können Spannungsüberschläge zwischen Ableiter und Zellgehäuse wirksam vermieden werden.

Die Verbundfolie kann einen Überstand im Bereich des Ableiters aufweisen, um den Endabschnitt auszubilden. Durch den Überstand wird ein Umklappen der Verbundfolie im Bereich des Ableiters erleichtert.

Der Endabschnitt kann von der Isolierschicht und der elektrisch leitfähigen Schicht gebildet werden, wobei die Isolierschicht in einem äußeren Bereich der Biegung angeordnet ist. Alternativ kann der Endabschnitt nur von der Isolierschicht gebildet werden. In beiden Fällen wird der für Spannungsüberschläge gefährdete Bereich der elektrisch leitfähigen Schicht von der Isolierschicht umschlossen bzw. abgeschirmt.

Alternativ kann die Verbundfolie eine weitere Schicht aufweisen, Die elektrisch leitfähige Schicht kann dabei zwischen der Isolierschicht und der weiteren Schicht angeordnet sein.

Erfindungsgemäß grenzt der Endabschnitt nach der Biegung an eine Außenseite des Zellgehäuses.

Somit kann es sich bei der Biegung um eine 180° Biegung handeln. Dabei ist der Endabschnitt mit der Außenseite des Zellgehäuses verklebt. Durch die Verwendung eines Klebers kann der Endabschnitt sicher am Zellgehäuse fixiert werden. Ein Zurückbiegen des Endabschnitts wird verhindert.

Alternativ oder zusätzlich kann die Verbundfolie plastisch verformbar sein und die Biegung eine plastische Verformung der Verbundfolie sein. In diesem Fall ist es nicht erforderlich, den Endabschnitt zusätzlich zu fixieren. Um die Verformbarkeit zu gewährleisten, kann beispielsweise eine dickere elektrisch leitfähige Schicht eingesetzt werden. Der Einsatz einer solchen dickeren leitfähigen Schicht kann auch eine verbesserte Wärmeableitung ermöglichen.

Die Isolierschicht kann eine Kunststoffschicht und die elektrisch leitfähige Schicht eine Metallschicht sein. Beispielsweise kann die Isolierschicht aus Polyolefin und die elektrisch leitfähige Schicht aus Aluminium sein. Somit können bereits bekannte Verbundfolien erfindungsgemäß eingesetzt werden.

Die vorliegende Erfindung schafft ferner ein galvanisches Element mit einem Zellgehäuse, gemäß der vorliegenden Erfindung. Dabei kann die galvanische Zelle einen Ableiter aufweisen, der angrenzend an den Endabschnitt der Verbundfolie angeordnet ist. Somit können bei dem erfindungsgemäßen galvanischen Element Spannungsüberschläge zwischen Ableiter und Zellgehäuse wirksam vermieden werden.

Alternativ kann die Schnittkante auch mit einem Abdecklack, wie man ihn z.B. aus der Platinenfertigung kennt isoliert werden. Nachteil hierbei ist, dass leicht Beschädigungen auftreten können, und der Schutzlack separat appliziert werden muss. Auch ist die Kontrolle der Beschichtung nur schlecht möglich-

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung eines Abschnitts eines nicht erfindungsgemäßen Zellgehäuses;
- Fig. 2: eine weitere Darstellung eines Abschnitts eines erfindungsgemäßen Zellgehäuses;
- Fig. 3: eine weitere Darstellung eines Abschnitts eines erfindungsgemäßen Zellgehäuses;
- Fig. 4: eine weitere Darstellung eines Abschnitts eines nicht erfindungsgemäßen Zellgehäuses;
- Fig. 5: eine weitere Darstellung eines Abschnitts eines nicht erfindungsgemäßen Zellgehäuses;
- Fig. 6: eine Darstellung eines Abschnitts eines Zellgehäuses gemäß dem Stand der Technik; und
- Fig. 7: eine weitere Darstellung eines Abschnitts eines Zellgehäuses gemäß dem Stand der Technik.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

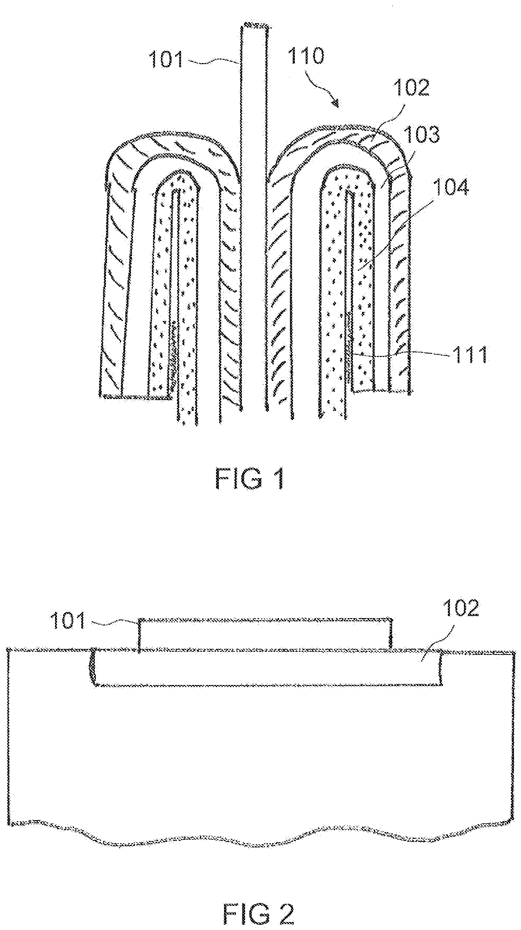

Fig. 1 zeigt einen Abschnitt eines Zellgehäuses einer galvanischen Zelle, gemäß eines nicht erfindungsgemäßen Ausführungsbeispiels. Bei der galvanischen Zelle kann es sich um eine Li-Ionen oder Li-Polymer Zelle handeln. Insbesondere kann es sich um eine prismatische Zelle mit einer Softverpackung aus Aluminium-verbundfolie, also um eine sogenannten Coffee Bag Zelle handeln.

Gezeigt ist ein Abschnitt des Zellgehäuses im Bereich eines Stromableiters 101 der galvanischen Zelle, Der Ableiter 101 kann mit einer Elektrode der galvanischen Zelle verbunden sein. Das Zellgehäuse weist eine Verbundfolie aus mindestens einer elektrisch isolierenden Schicht 102 und einer elektrisch leitfähigen Schicht 103 auf. Die elektrisch isolierende Schicht 102 kann über den Verlauf des Zellgehäuses an den Ableiter 101 angrenzen. Ferner kann die Verbundfolie eine weitere Schicht 104 aufweisen. Die elektrisch leitfähige Schicht 103 kann dabei zwischen der Isolierschicht 102 und der weiteren Schicht 104 angeordnet sein. Bei der Isolierschicht 102 und der weiteren Schicht 104 kann es sich um Kunststoffschichten handeln. Die elektrisch leitfähige Schicht 103 kann als Metallschicht ausgebildet sein. Gemäß diesem Ausführungsbeispiel weist das Zellgehäuse eine Aluminium-Verbundfolie mit einer Isolierschicht 102 aus einem Polyolefin und einer elektrisch leitfähigen Schicht 103 aus Aluminium auf. Im speziellen weist die Aluminium-Verbundfolie einen Aufbau aus modifizierten Polypropylen 102, Aluminium 103 und Polyamid 104 oder ein anderes höherschmelzendes Polymer, beispielsweise Polyethylenterephthalat (PET) oder eine Kombination aus Polyamid und PET, auf. Anstatt des modifizierten Polypropylens 102 kann auch ein anderes modifiziertes Polyolefin zum Einsatz kommen.

Beispielsweise kann ein Aufbau aus 25µm Polyamid 104, 40µm Aluminium 103 und 50µm Polypropylen 102 eingesetzt werden.

Auf der Ableiterseite weist die Gehäusefolie einen Überstand auf, aus dem eine Biegung 110 geformt ist. Durch die Biegung 110 wird die an dem Ableiter 101 entlanggeführte Verbundfolie von dem Ableiter 101 weg und schließlich zu der am Ableiter 101 anliegenden Verbundfolie zurückgeführt. Somit kann der Endabschnitt der Verbundfolie durch die Biegung 101 an eine Außenseite des Zellgehäuses angrenzen. Dabei kann der Endabschnitt mit der Außenseite des Zellgehäuses in Verbindung stehen oder einen Abstand einhalten. In dieser Ausführung wird das freiliegende Ende der Aluminiumschicht 103 durch die Biegung 110 von dem Ableiter 101 weggeführt. Zusätzlich ist die Aluminiumschicht 103 von der Schicht aus modifizierten Polypropylen 102 gegenüber dem Ableiter 101 abgeschirmt.

Der Überstand kann nach der Siegelung über den Ableiter 101 um 180° umgeklappt werden und z.B. mittels eines Klebebandes oder des Klebers 111 fixiert werden. Gemäß diesem Ausführungsbeispiel ist der Endabschnitt der Verbundfolie mit Kleber 111 am Zellgehäuse fixiert. Statt einer Schnittkante ist nun eine Schicht Polypropylen Isolation 102 zwischen Ableiter 101 und Gehäusefolie angeordnet.

Gemäß dem in Fig. 1 gezeigten Ausführungsbeispiel ist die Verbundfolie, jeweils mit einer entsprechenden Biegung 110, beidseitig des Ableiters 101 angeordnet.

Fig. 2 zeigt einen Abschnitt eines Zellgehäuses einer galvanischen Zelle, gemäß einem Ausführungsbeispiel der vorliegenden Erfindung. Gemäß diesem Ausführungsbeispiel weist die Gehäusefolie nur im Bereich des Ableiters 101 einen Überstand auf. In diesem Bereich ist die Verbundfolie umgefaltet, so dass die Isolierschicht 102 nach außen zeigt.

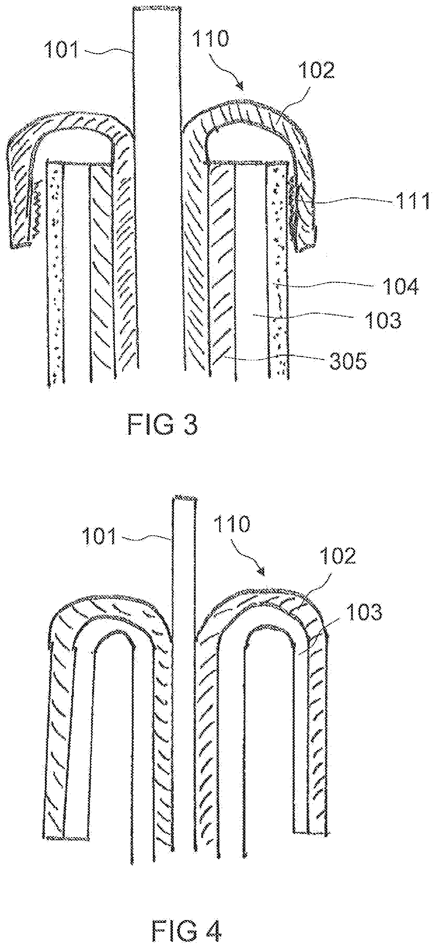

Fig. 3 zeigt einen Abschnitt eines Zellgehäuses einer galvanischen Zelle, gemäß einem weiteren Ausführungsbeispiel der vorliegenden Erfindung. Gemäß diesem Ausführungsbeispiel wird nur die modifzierte Polyolefinschicht 102 weiter überstehen gelassen und umgefaltet. Neben der Schicht aus modifiziertem Polypropylen 102, die an den Ableiter 101 angrenzt, kann die Verbundfolie eine Schicht aus Aluminium 103, eine Schicht aus Polyamid 104 und eine Schicht aus Polypropylen 305 aufweisen. Die Schicht aus modifzierten Polypropylen 102 ist in Richtung des Ableiters 101 länger ausgeführt, als die übrigen Schichten 103, 104, 305. Durch die Biegung 110 kann der überstehende Bereich der Schicht aus modifzierten Polypropylen 102 um die übrigen Schichten 103, 104, 305 gebogen werden und durch einen Kleber 111 an der außen liegenden Schicht 104 fixiert werden. Somit wird die Schnittkante der Aluminiumschicht 103 von der Schicht aus modifzierten Polypropylen 102 abgedeckt.

Fig. 4 zeigt einen Abschnitt eines Zellgehäuses einer galvanischen Zelle, gemäß eines nicht erfindungsgemäßen Ausführungsbeispiels. Gemäß diesem Ausführungsbeispiel ist eine gesonderte Fixierung des Endabschnitts der Verbundfolie am Zellgehäuse nicht erforderlich. Dazu kann das Gehäuse der erfindungsgemäßen Zelle aus einer formbaren Verbundfolie bestehen, die aus einem Material besteht, das die Biegung 110 dauerhaft beibehält. Somit kann die Biegung 110 eine plastische Verformung der Verbundfolie sein.

Dazu kann die Folie eine dickere Aluminiumschicht 103 aufweisen, die ein Umfalten auch ohne Klebung ermöglicht. Ferner kann die Verbundfolie eine Schicht aus modifzierten Poypropylen 102 aufweisen. Die Aluminiumfolie 103 kann eine 50-500µm und insbesondere eine walzharte 250µm dicke Aluminiumfolie sein. Die Aluminiumfolie 103 kann auf der Innenseite mit 10-80µm und insbesondere mit 30µm Polypropylen kaschiert sein.

Fig. 5 zeigt einen Abschnitt eines Zellgehäuses einer galvanischen Zelle, gemäß eines nicht erfindungsgemäßen Ausführungsbeispiels. Dabei wird eine Kombination der in den Figuren 1 und 4 gezeigten Folien verwendet. Auf der linken Seite des Ableiters 101 wird eine Verbundfolie eingesetzt, die keine Fixierung des Endabschnitts der Verbundfolie am Zellgehäuse benötigt. Auf der rechten Seite ist der umgebogene Endabschnitt dagegen mit einer Klebeschicht 111 fixiert.

Das auf einer Verbundfolie basierende, erfindungsgemäße Zellgehäuse kann für ein galvanisches Element oder eine galvanische Zelle eingesetzt werden. Das galvanische Element kann ein Elektrodenensemble aufweisen, das innerhalb des Zellgehäuses angeordnet ist. Zur Ableitung des Stroms kann das galvanische Element den Ableiter 101 aufweisen. Der Ableiter kann 101 angrenzend an den Endabschnitt der Verbundfolie angeordnet sein, der die Biegung 110 aufweist. Durch die Biegung 110 besteht eine Isolierung zwischen dem Ableiter 101 und der elektrisch leitfähigen Schicht 103 der Verbundfolie. Somit wird bei Pouchzellen eine Isolation von Ableiter 101 zu Gehäuse geschaffen.

Die beschriebenen Ausführungsbeispiele sind nur beispielhaft gewählt und können miteinander kombiniert werden. Insbesondere sind auch andere, als die in Fig. 5 gezeigte Kombination von Verbundfolien möglich. Ebenso können andere Materialien und Schichtdicken eingesetzt werden. Auch kann das erfindungsgemäße Zellgehäuse bei anderen als den genannten galvanischen Elementen eingesetzt werden. Auch kann die beschriebene Biegung an anderen Endstellen der Verbundfolie angeordnet werden, an denen die Gefahr eines Spannungsüberschlags oder einer unerwünschten Kontaktierung besteht.

## Patentansprüche

1. Zellgehäuse für ein galvanisches Element, wobei das Zellgehäuse eine Verbundfolie mit einer Isolierschicht (102) und einer elektrisch leitfähigen Schicht (103) aufweist, wobei ein Endabschnitt der Verbundfolie eine Biegung (110) aufweist, die geeignet ist, um eine Isolierung für die elektrisch leitfähige Schicht auszubilden, **dadurch gekennzeichnet, dass** der Endabschnitt nach der Biegung (110) der Isolierschicht (102) mit seiner Innenseite an eine Außenseite des Zellgehäuses angrenzt und die Innenseite mit der Außenseite des Zellgehäuses verklebt (111) ist.

2. Zellgehäuse gemäß Anspruch 1, bei dem die Biegung (110) ausgebildet ist, um die elektrisch leitfähige Schicht (103) gegenüber einem Ableiter (101) der galvanischen Zelle zu isolieren.

3. Zellgehäuse gemäß Anspruch 1 oder 2, bei dem die Verbundfolie eine weitere Schicht (104) aufweist.

4. Zellgehäuse gemäß Anspruch 3, bei dem die weitere Schicht (104) aus Polyamid ist.

5. Zellgehäuse gemäß einem der vorangegangenen Ansprüche, bei dem die Verbundfolie einen Überstand im Bereich des Ableiters (101) aufweist, um den Endabschnitt auszubilden.

6. Zellgehäuse gemäß einem der vorangegangenen Ansprüche, bei dem der Endabschnitt von der Isolierschicht (102) und der elektrisch leitfähigen Schicht (103) gebildet wird, wobei die Isolierschicht in einem äußeren Bereich der Biegung (110) angeordnet ist.

7. Zellgehäuse gemäß einem der vorangegangenen Ansprüche, bei dem der Endabschnitt nur von der Isolierschicht (102) gebildet wird.

8. Zellgehäuse gemäß einem der vorangegangenen Ansprüche, bei dem die Verbundfolie plastisch verformbar ist, und die Biegung (110) eine plastische Verformung der Verbundfolie ist.

9. Zellgehäuse gemäß einem der vorangegangenen Ansprüche, bei dem die Isolierschicht (102) eine Kunststoffschicht und die elektrisch leitfähige Schicht (103) eine Metallschicht ist.

10. Zellgehäuse gemäß einem der vorangegangenen Ansprüche, bei dem die Isolierschicht (102) aus Polyolefin und die elektrisch leitfähige Schicht (103) aus Aluminium ist.

11. Galvanisches Element, mit einem Zellgehäuse, gemäß einem der vorangegangenen Ansprüche.

12. Galvanische Zelle gemäß Anspruch 11, mit einem Ableiter (101), der angrenzend an den Endabschnitt der Verbundfolie angeordnet ist.

## Claims

1. A cell housing for a galvanic element, wherein the cell housing has a composite film with an insulating layer (102) and an electrically conductive layer (103), wherein an end section of the composite film has a curve (110) which is suitable for forming an insulation for the electrically conductive layer, **characterised in that** the inside of the end section, after the curve (110) of the insulating layer (102), is adjacent to an outside of the cell housing and the inside is bonded (111) with the outside of the cell housing.

2. The cell housing according to claim 1, wherein the curve (110) is formed in order to insulate the electrically conductive layer (103) from an arrester (101) of the galvanic cell.

3. The cell housing according to claim 1 or 2, wherein the composite film has a further layer (104).

4. The cell housing according to claim 3, wherein the further layer (104) is of polyamide.

5. The cell housing according to one of the preceding claims, wherein the composite film has an overhang in the region of the arrester (101) in order to form the end section.

6. The cell housing according to one of the preceding claims, wherein the end section is formed by the insulating layer (102) and the electrically conductive layer (103), wherein the insulating layer is arranged in an outer region of the curve (110).

7. The cell housing according to one of the preceding claims, wherein the end section is only formed by the insulating layer (102).

8. The cell housing according to one of the preceding claims, wherein the composite film is plastically deformable and the curve (110) is a plastic deformation of the composite film.

9. The cell housing according to one of the preceding claims, wherein the insulating layer (102) is a plastic layer and the electrically conductive layer (103) is a metal layer.

10. The cell housing according to one of the preceding claims, wherein the insulating layer (102) is of polyolefin and the electrically conductive layer (103) is of aluminium.

11. A galvanic element with a cell housing according to one of the preceding claims.

12. The galvanic cell according to claim 11, with an arrester (101) which is arranged adjacent to the end section of the composite film.

## Revendications

1. Boîtier de cellule pour un élément galvanique, où le boîtier de cellule présente un film composite comportant une couche isolante (102) et une couche électroconductrice (103), où une partie d'extrémité du film composite présente une courbure (110) qui est appropriée pour former une isolation pour la couche électroconductrice, **caractérisé en ce que** la partie d'extrémité située après la courbure (110) de la couche isolante (102) est adjacente, par le côté intérieur de ladite partie d'extrémité, à un côté extérieur du boîtier de cellule, le côté intérieur étant collé (111) avec le côté extérieur du boîtier de cellule.

2. Boîtier de cellule selon la revendication 1, dans lequel la courbure (110) est formée pour isoler la couche électroconductrice (103) par rapport à un parafoudre (101) de la cellule galvanique.

3. Boîtier de cellule selon la revendication 1 ou 2, dans lequel le film composite présente une autre couche (104).

4. Boîtier de cellule selon la revendication 3, dans lequel l'autre couche (104) est en polyamide.

5. Boîtier de cellule selon l'une quelconque des revendications précédentes, dans lequel le film composite présente une partie saillante dans la zone du parafoudre (101), pour former la partie d'extrémité.

6. Boîtier de cellule selon l'une quelconque des revendications précédentes, dans lequel la partie d'extrémité est formée par la couche isolante (102) et par la couche électroconductrice (103), où la couche isolante est disposée dans une zone située le plus à l'extérieur de la courbure (110).

7. Boîtier de cellule selon l'une quelconque des revendications précédentes, dans lequel la partie d'extrémité est formée seulement par la couche isolante (102).

8. Boîtier de cellule selon l'une quelconque des revendications précédentes, dans lequel le film composite est déformable plastiquement, et la courbure (110) est une déformation plastique du film composite.

9. Boîtier de cellule selon l'une quelconque des revendications précédentes, dans lequel la couche isolante (102) est une couche de matière plastique, la couche électroconductrice (103) étant une couche métallique.

10. Boîtier de cellule selon l'une quelconque des revendications précédentes, dans lequel la couche isolante (102) se compose de polyoléfine, la couche électroconductrice (103) se composant d'aluminium.

11. Elément galvanique comprenant un boîtier de cellule selon l'une quelconque des revendications précédentes.

12. Cellule galvanique selon la revendication 11, comprenant un parafoudre (101) qui est disposé en étant adjacent à la partie d'extrémité du film composite.
